# EUROPEAN PATENT SPECIFICATION

(11) **EP 3 037 590 B1**
(45) Date of publication and mention of the grant of the patent: **30.03.2022**
(21) Application number: 15198147.9
(22) Date of filing: 07.12.2015
(51) Int. Cl.: E02F 9/22, E02F 9/26

(54) **METHOD OF PREVENTING A ROLLBACK OF A CONSTRUCTION MACHINE AND APPARATUS FOR PERFORMING THE SAME**
VERFAHREN ZUR VERHINDERUNG DES ZURÜCKROLLENS EINER BAUMASCHINE UND VORRICHTUNG ZUR DURCHFÜHRUNG DAVON
PROCÉDÉ PERMETTANT D'EMPÊCHER UN RECUL EN ARRIÈRE D'UNE MACHINE DE CONSTRUCTION ET APPAREIL À CET EFFET

(30) Priority: 24.12.2014 KR 20140187917
(43) Date of publication of application: 29.06.2016
(73) Proprietor: Hyundai Doosan Infracore Co., Ltd., Incheon (KR)
(72) Inventor: KIM, Dong-hyun, Seoul 137-808 (KR); KWAK, Kyu-sun, Incheon 404-799 (KR)
(74) Representative: Isarpatent

(56) References cited:
- WO-A1-2013/122101
- US-A1- 2013 261 909

## Description

### BACKGROUND

### 1. Field of the invention

This invention relates to a method of preventing a rollback of a construction machine and an apparatus for performing the same.

### 2. Description of the Related Art

Generally, an excavator may include a lower driving body, an upper swing body pivotally connected to the lower driving body, a boom connected to the upper swing body, an arm connected to the boom, and an attachment selectively connected to the arm. The attachment may include a bucket, breaker, crusher, etc.

According to related arts, when the excavator stopped on a slope may be upwardly moved, the excavator may be backwardly moved due to a weight of the excavator to generate a safety accident. Particularly, when the excavator may be backwardly moved severely, a rollover of the excavator may be generated.

WO 2013/122 101 A1 discloses an electrically driven working vehicle that reduces assist power from an electricity storage device in acceleration after being modulated and can be accelerated to a level equal to or better than a torque-converting vehicle. The electrically driven working vehicle has an engine, a power generating electric motor mechanically connected to the engine, a power generating inverter for controlling the amount of power generated by the power generating electric motor, a traveling electric motor for driving a vehicle body, an electricity storage device electrically connected to the power generating inverter and the traveling electric motor, and a forward and backward travel changing means for changing the travelling direction of the vehicle body. The electrically driven working vehicle is equipped with a control means that outputs an instruction for increasing the amount of power generated by the power generating electric motor to the power generating inverter when the voltage of the electricity storage device is the maximum voltage value or less and a speed signal from the traveling electric motor corresponds to a preset setting speed or less due to the change by the forward and backward travel changing means.

US 2013/261 909 A1 discloses a rollback prevention system and method for a mobile machine such as a construction machine. The system detects a driving direction of the machine on a slope and compares same with a desired driving direction set by a driver. The comparison results are used to selectively generate a hydraulic brake force. In particular, a transmission torque is increased when the travel direction of the machine is opposite to the desired travel direction.

### SUMMARY

The invention provides a method of preventing a rollback of a construction machine on a slope according to claim 1.

The invention also provide an apparatus for performing the above-mentioned method according to claim 4. Further advantageous embodiments and improvements of the invention are disclosed in the attached dependent claims. Hereinafter, when examples are referred to, it should be understood that they are not according to the invention but serve further illustration of the invention, unless example or features are referred to as an embodiment of the invention or marked as "according to the invention".

According to the invention, there is provided a method of preventing a rollback of a construction machine. According to the invention, in the method of preventing the rollback of the construction machine, see claim 1, in particular a wheel excavator, a driving direction of the construction machine on a slope is detected. The detected driving direction of the construction machine is compared with a desired driving direction of a driver for the construction machine. A hydraulic brake force is selectively generated using a driving motor in the construction machine in accordance with comparison results.

In an embodiment, detecting the driving direction of the construction machine includes detecting an operating direction of a transmission in the construction machine, see claim 2.

In another embodiment, detecting the driving direction of the construction machine includes detecting a rotating direction of a wheel in the construction machine, see claim 4.

According to the invention, generating the hydraulic brake force includes maximumly setting an oil discharge amount of the driving motor.

According to the invention, the construction machine is a wheel excavator.

According to the invention, there is provided an apparatus for preventing a rollback of a construction machine. According to the invention, see claim 4, the apparatus includes a sensor and a controller. The sensor detects a driving direction of the construction machine on a slope. The controller compares a detected driving direction of the construction machine with a desired driving direction of a driver for the construction machine. The controller selectively generates a hydraulic brake force using a driving motor in the construction machine in accordance with comparison results.

In one embodiment, see claim 5, the sensor includes a transmission sensor configured to sense an operating direction of a transmission in the construction machine.

In another embodiment, see claim 6, the sensor includes a wheel sensor configured to sense a rotating direction of a wheel in the construction machine.

According to the invention, the controller maximumly set an oil discharge amount of the driving motor.

According to the invention, the construction machine is a wheel excavator.

According to the invention, when the desired driving direction of the driver doe not coincided with the actual driving direction of the construction machine, the hydraulic brake force is generated from the driving motor. Thus, the hydraulic brake force may be applied to the construction machine to prevent the rollback of the construction machine.

### BRIEF DESCRIPTION OF THE DRAWINGS

The invention will be more clearly understood from the following detailed description taken in conjunction with the accompanying drawings. FIGS. 1 to 4 describe the details of the invention as claimed.
FIG. 1 is a block diagram illustrating an apparatus for preventing a rollback of a construction machine in accordance with the invention;
FIG. 2 is a flow chart illustrating a method of preventing the rollback of the construction machine using the apparatus in FIG. 1;
FIG. 3 is a block diagram illustrating an apparatus for preventing a rollback of a construction machine in accordance with the invention; and
FIG. 4 is a flow chart illustrating a method of preventing the rollback of the construction machine using the apparatus in FIG. 3.

### DETAILED DESCRIPTION OF THE EMBODIMENTS

Various details of the invention will be described more fully hereinafter with reference to the accompanying drawings, in which some example embodiments are shown. The present invention may, however, be embodied in many different forms and should not be construed as limited to the example embodiments set forth herein. Rather, the details are provided so that this disclosure will be thorough and complete, and will fully convey the scope of the present invention to those skilled in the art. In the drawings, the sizes and relative sizes of layers and regions may be exaggerated for clarity.

It will be understood that when an element or layer is referred to as being "on," "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

The terminology used herein is for the purpose of describing particular example embodiments only and is not intended to be limiting of the present invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The details of festures/steps of the invention are described herein with reference to cross-sectional illustrations that are schematic illustrations of idealized example embodiments (and intermediate structures). As such, variations from the shapes of the illustrations as a result, for example, of manufacturing techniques and/or tolerances, are to be expected. Thus, the details of features/steps of the invention should not be construed as limited to the particular shapes of regions illustrated herein but are to include deviations in shapes that result, for example, from manufacturing. For example, an implanted region illustrated as a rectangle will, typically, have rounded or curved features and/or a gradient of implant concentration at its edges rather than a binary change from implanted to non-implanted region. Likewise, a buried region formed by implantation may result in some implantation in the region between the buried region and the surface through which the implantation takes place. Thus, the regions illustrated in the figures are schematic in nature and their shapes are not intended to illustrate the actual shape of a region of a device and are not intended to limit the scope of the present invention.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, the invention will be explained in detail with reference to the accompanying drawings.

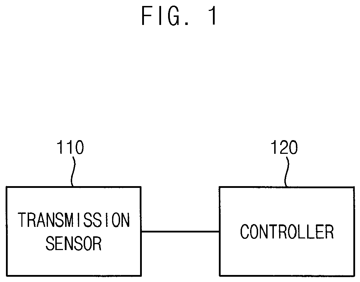

FIG. 1 is a block diagram illustrating an apparatus for preventing a rollback of a construction machine in accordance with the invention.

Referring to FIG. 1, an apparatus for preventing a rollback of a construction machine in accordance with one embodiment of the invention includes a transmission sensor 110 and a controller 120.

According to the invention, the construction machine is a wheel excavator. The wheel excavator may be moved by wheels rotated using a hydraulic pressure that may be generated from a driving motor. Thus, the wheel excavator may be moved forwardly or backwardly in accordance with transmitting directions of the hydraulic pressure in the transmission and rotating directions of the wheels. Alternatively, the construction machine may include a wheel loader besides the wheel excavator.

The transmission sensor 110 may be attached to the transmission of the wheel excavator. The transmission sensor 110 may detect operating directions of the transmission. Particularly, the transmission sensor 110 may detect whether a power transmission direction of the transmission may be a forward direction or a backward direction. Thus, the transmission sensor 110 may detect an actual driving direction of the wheel excavator.

The controller 120 may receive data obtained from the transmission sensor 110, i.e., the actual driving direction of the wheel excavator. According to the invention, the controller 120 compares a detected driving direction of the wheel excavator with a desired driving direction of the wheel excavator of a driver. According to the invention, the controller 120 determines whether the detected driving direction is coincided with the desired direction or not. In one embodiment, the controller 120 may include a transmission control unit (TCU).

Upward movements of the wheel excavator stopped on a slope can be classified into a forward drive and a backward drive. When a cabin of the wheel excavator is upwardly oriented on the slope, the driver can upwardly move the wheel excavator by the forward drive. In contrast, when the cabin is downwardly oriented on the slope, the driver can upwardly move the wheel excavator by the backward drive. In the forward drive and the backward drive, the wheel excavator may be downwardly moved by a weight of the wheel excavator.

When the actual driving direction of the wheel excavator is the downward direction due to the weight of the wheel excavator, although the desired driving direction of the driver may be the upward direction, according to the invention, the controller 120 may maximumly set an oil discharge amount of the driving motor. The maximum oil discharge amount may function as to increase a torque required for rotating the driving motor. Therefore, a hydraulic brake force is naturally generated from the driving motor. As a result, the hydraulic brake force is applied to the backwardly moved wheel excavator to prevent the rollback of the wheel excavator in the slope.

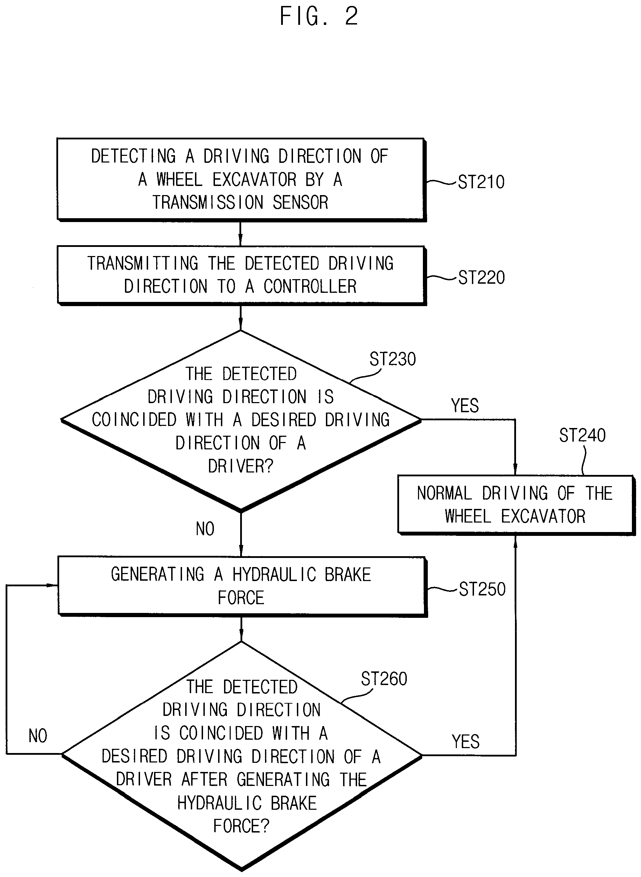

FIG. 2 is a flow chart illustrating a method of preventing the rollback of the construction machine using the apparatus in FIG. 1 according to one embodiment of the invention.

Referring to FIGS. 1 and 2, the driver may upwardly move the wheel excavator on the slope by the forward drive or the backward drive. In step ST210, the transmission sensor 110 detects an actual driving direction of the wheel excavator. Particularly, the transmission sensor 110 detectsa the power transmission direction of the transmission that corresponds to the upward direction or the downward direction of the wheel excavator.

In step ST220, the actual driving direction of the wheel excavator detected by the transmission sensor 110 is transmitted to the controller 120.

In step ST230, according to the invention, the controller 120 compares the actual driving direction with the desired driving direction to determine whether the actual driving direction is coincided with the desired driving direction or not.

In step ST240, when the driver may intend to upwardly move the wheel excavator and the actual driving direction detected by the transmission sensor 110 may be the upward direction, the controller 120 will still maintain the normal drive of the wheel excavator.

In contrast, in step ST250, when the driver may intend to upwardly move the wheel excavator and the actual driving direction detected by the transmission sensor 110 may be the downward direction caused by the weight of the wheel excavator, the controller 120 may advantagesouly control a swash plate angle of the driving motor to maximumly set the oil discharge amount of the driving motor according to the invention. When the oil discharge amount is maximal, the torque required for rotating the driving motor is increased to generate the hydraulic brake force from the driving motor. Therefore, the hydraulic brake force can be applied to the backwardly moved wheel excavator on the slope to prevent the rollback of the wheel excavator on the slope.

In step ST260, during applying the hydraulic brake force to the wheel excavator, the controller 120 can continuously determine whether the actual driving direction is coincided with the desired driving direction or not.

When the actual driving direction is coincided with the desired driving direction, in step ST240, the controller 120 can convert the wheel excavator into the normal drive.

In contrast, when the actual driving direction is not coincided with the desired driving direction, in step ST250, the controller 120 can control the driving motor to generate the hydraulic brake force to prevent the rollback of the wheel excavator in the slope.

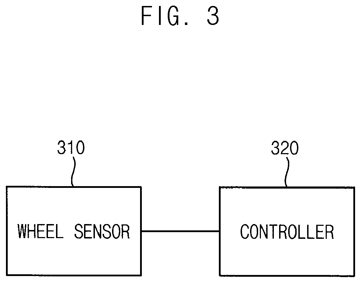

FIG. 3 is a block diagram illustrating an apparatus for preventing a rollback of a construction machine in accordance with example embodiments.

Referring to FIG. 3, an apparatus for preventing a rollback of a construction machine in accordance with another embodiment includes a wheel sensor 310 and a controller 320.

The wheel sensor 310 may be attached to the wheel of the wheel excavator. The wheel sensor 310 may detect rotating directions of the wheel. Particularly, the wheel sensor 310 may detect the rotating direction of the wheel that may be a forward direction or a backward direction. Thus, the wheel sensor 310 may detect an actual driving direction of the wheel excavator.

The controller 320 may receive data obtained from the wheel sensor 310, i.e., the actual driving direction of the wheel excavator. According to the invention, the controller 320 compares a detected driving direction of the wheel excavator with a desired driving direction of the wheel excavator of a driver. The controller 320 determines whether the detected driving direction ids coincided with the desired direction or not.

When the actual driving direction of the wheel excavator is the downward direction due to the weight of the wheel excavator, although the desired driving direction of the driver is the upward direction, according to the invention, the controller 320 maximumly sets an oil discharge amount of the driving motor. The maximum oil discharge amount functions as to increase a torque required for rotating the driving motor. Therefore, a hydraulic brake force can be naturally generated from the driving motor. As a result, the hydraulic brake force can applied to the backwardly moved wheel excavator to prevent the rollback of the wheel excavator in the slope.

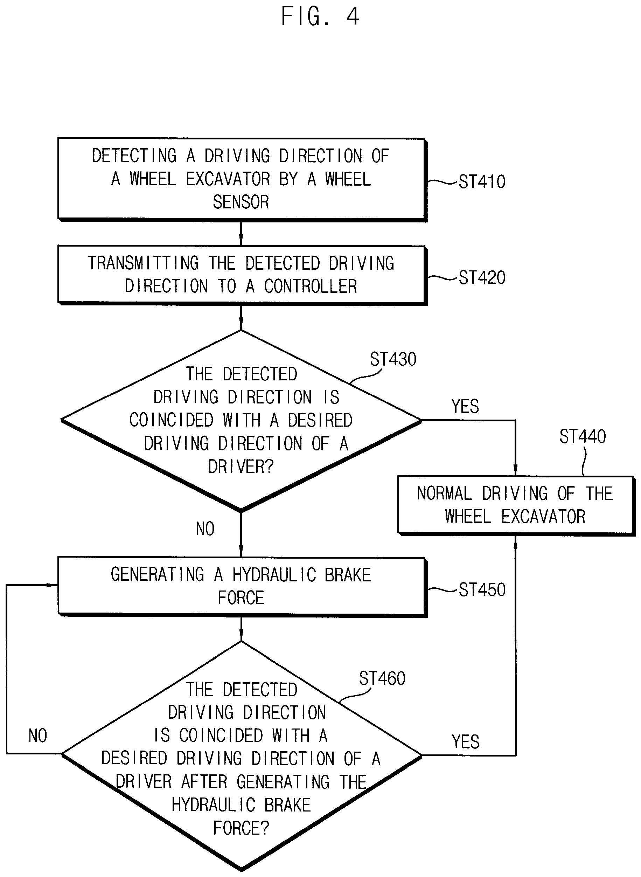

FIG. 4 is a flow chart illustrating a method of preventing the rollback of the construction machine using the apparatus in FIG. 3 according to another embodiment of the invention.

Referring to FIGS. 3 and 4, the driver may upwardly move the wheel excavator on the slope by the forward drive or the backward drive. In step ST410, according to the embodiment, the wheel sensor 310 detects an actual driving direction of the wheel excavator. Particularly, the wheel sensor 310 may detect the power transmission direction of the transmission that may correspond to the upward direction or the downward direction of the wheel excavator.

In step ST420, the actual driving direction of the wheel excavator detected by the wheel sensor 310 may be transmitted to the controller 320.

In step ST430, according to the invention, the controller 320 compares the actual driving direction with the desired driving direction to determine whether the actual driving direction is coincided with the desired driving direction or not.

In step ST440, when the driver may intend to upwardly move the wheel excavator and the actual driving direction detected by the wheel sensor 310 may be the upward direction, the controller 320 may still maintain the normal drive of the wheel excavator.

In contrast, in step ST450, when the driver intends to upwardly move the wheel excavator and the actual driving direction detected by the wheel sensor 310 is the downward direction caused by the weight of the wheel excavator, according to one embodiment the invention, the controller 320 can control a swash plate angle of the driving motor to maximumly set the oil discharge amount of the driving motor. When the oil discharge amount is, according to the invention, maximal, the torque required for rotating the driving motor can increased to generate the hydraulic brake force from the driving motor. Therefore, the hydraulic brake force can be applied to the backwardly moved wheel excavator on the slope to prevent the rollback of the wheel excavator on the slope.

In step ST460, during applying the hydraulic brake force to the wheel excavator, the controller 320 may continuously determine whether the actual driving direction may be coincided with the desired driving direction or not.

When the actual driving direction may be coincided with the desired driving direction, in step ST440, the controller 320 may convert the wheel excavator into the normal drive.

In contrast, when the actual driving direction is not coincided with the desired driving direction, in step ST450, the controller 320 may control the driving motor to generate the hydraulic brake force to prevent the rollback of the wheel excavator in the slope.

According to the invention, when the desired driving direction of the driver is not coincided with the actual driving direction of the construction machine, the hydraulic brake force can be generated from the driving motor. Thus, the hydraulic brake force can be applied to the construction machine to prevent the rollback of the construction machine.

## Claims

1. A method of preventing a rollback of a wheel excavator, the wheel excavator including a driving motor and a transmission, the method comprising:
detecting (ST210, ST220; ST410, ST420) a driving direction of the wheel excavator on a slope;
comparing (ST230, ST260; ST430, ST460) the driving direction of the wheel excavator with a desired driving direction of a driver for the wheel excavator; and
selectively generating (ST250, ST260; ST450, ST460) a hydraulic brake force using the driving motor of the wheel excavator in accordance with comparison results; and **characterized by**:
converting (ST240; ST440) the wheel excavator into a normal drive when the driving direction of the wheel excavator is coincided with the desired driving direction after the generating a hydraulic brake force,
wherein generating (ST250; ST450) the hydraulic brake force comprises maximumly setting an oil discharge amount of the driving motor when the driving direction of the wheel excavator is not coincided with the desired driving direction.

2. The method of claim 1, wherein detecting the driving direction of the wheel excavator comprises detecting (110) an operating direction of the transmission in the wheel excavator.

3. The method of claim 1, wherein detecting the driving direction of the wheel excavator comprises detecting (310) a rotating direction of a wheel in the wheel excavator.

4. An apparatus for preventing a rollback of a wheel excavator, the wheel excavator including a driving motor and a transmission, the apparatus comprising:
a sensor (110; 310) configured to detect (ST210, ST220; ST410, ST420) a driving direction of the wheel excavator on a slope; and
a controller (120, 320) configured to compare (ST230, ST260; ST430, ST460) the driving direction of the wheel excavator with a desired driving direction of a driver for the wheel excavator, and to selectively generate (ST250, ST260; ST450, ST460) a hydraulic brake force using the driving motor of the wheel excavator in accordance with comparison results; **characterized in that**
the controller (120) converts the wheel excavator into a normal drive (ST240; ST440) when the driving direction of the wheel excavator is coincided (ST260; ST460) with the desired driving direction after generating the hydraulic brake force, and
wherein the controller (120) is configured to maximumly set an oil discharge amount of the driving motor for generating (ST250; ST450) the hydraulic brake force when the driving direction of the wheel excavator is not coincided with the desired driving direction.

5. The apparatus of claim 4, wherein the sensor comprises a transmission sensor (110) configured to detect an operating direction of the transmission in the wheel excavator.

6. The apparatus of claim 4, wherein the sensor comprises a wheel sensor (310) configured to detect a rotating direction of a wheel in the wheel excavator.

## Patentansprüche

1. Verfahren zum Verhindern des Zurückrollens eines Radbaggers, wobei der Radbagger einen Antriebsmotor und ein Getriebe umfasst, wobei das Verfahren umfasst:
Detektieren (ST210, ST220; ST410, ST420) einer Fahrtrichtung des Radbaggers an einem Hang;
Vergleichen (ST230, ST260; ST430, ST460) der Fahrtrichtung des Radbaggers mit einer gewünschten Fahrtrichtung eines Fahrers für den Radbagger; und
selektives Generieren (ST250, ST260; ST450, ST460) einer hydraulischen Bremskraft unter Verwendung des Antriebsmotors des Radbaggers gemäß
Vergleichsergebnissen; und **gekennzeichnet durch**:
Umwandeln (ST240; ST440) des Radbaggers in einen normalen Antrieb, wenn die Fahrtrichtung des Radbaggers nach dem Generieren einer hydraulischen Bremskraft mit der gewünschten Fahrtrichtung übereinstimmt,
wobei das Generieren (ST250; ST450) der hydraulischen Bremskraft umfasst, eine Ölauslassmenge des Antriebsmotors auf ein Maximum einzustellen, wenn die Fahrtrichtung des Radbaggers nicht mit der gewünschten Fahrtrichtung übereinstimmt.

2. Verfahren nach Anspruch 1, wobei das Detektieren der Fahrtrichtung des Radbaggers das Detektieren (110) einer Betriebsrichtung des Getriebes in dem Radbagger umfasst.

3. Verfahren nach Anspruch 1, wobei das Detektieren der Fahrtrichtung des Radbaggers das Detektieren (310) einer Drehrichtung eines Rades in dem Radbagger umfasst.

4. Vorrichtung zum Verhindern des Zurückrollens eines Radbaggers, wobei der Radbagger einen Antriebsmotor und ein Getriebe aufweist, wobei die Vorrichtung umfasst:
einen Sensor (110; 310), der dafür eingerichtet ist, eine Fahrtrichtung des Radbaggers an einem Hang zu detektieren (ST210, ST220; ST410, ST420); und
einen Controller (120, 320), der dafür eingerichtet ist, die Fahrtrichtung des Radbaggers mit einer gewünschten Fahrtrichtung eines Fahrers für den Radbagger zu vergleichen (ST230, ST260; ST430, ST460) und selektiv eine hydraulische Bremskraft unter Verwendung des Antriebsmotors des Radbaggers gemäß Vergleichsergebnissen zu generieren (ST250, ST260; ST450, ST460);
**dadurch gekennzeichnet, dass**
der Controller (120) den Radbagger in einen normalen Antrieb (ST240; ST440) umwandelt, wenn die Fahrtrichtung des Radbaggers nach dem Generieren der hydraulischen Bremskraft mit der gewünschten Fahrtrichtung übereinstimmt (ST260; ST460), und
wobei der Controller (120) dafür eingerichtet ist, eine Ölauslassmenge des Antriebsmotors zum Generieren (ST250; ST450) der hydraulischen Bremskraft auf ein Maximum einzustellen, wenn die Fahrtrichtung des Radbaggers nicht mit der gewünschten Fahrtrichtung übereinstimmt.

5. Vorrichtung nach Anspruch 4, wobei der Sensor einen Getriebesensor (110) umfasst, der dafür eingerichtet ist, eine Betriebsrichtung des Getriebes in dem Radbagger zu detektieren.

6. Vorrichtung nach Anspruch 4, wobei der Sensor einen Radsensor (310) umfasst, der dafür eingerichtet ist, die Drehrichtung eines Rades in dem Radbagger zu detektieren.

## Revendications

1. Procédé pour empêcher le recul d'une pelle sur roues, la pelle sur roues comprenant un moteur d'entraînement et une boîte de vitesses, le procédé comprenant les étapes suivantes :
détecter (ST210, ST220 ; ST410, ST420) un sens d'entraînement de la pelle sur roues sur une pente ;
comparer (ST230, ST260 ; ST430, ST460) le sens d'entraînement de la pelle sur roues avec un sens d'entraînement souhaité par un conducteur pour la pelle sur roues ; et
engendrer de manière sélective (ST250, ST260 ; ST450, ST460) une force de frein hydraulique à l'aide du moteur d'entraînement de la pelle sur roues en fonction des résultats de comparaison ; et **caractérisé par** l'étape suivante :
faire passer (ST240 ; ST440) la pelle sur roues à un entraînement normal, lorsque le sens d'entraînement de la pelle sur roues concorde avec le sens d'entraînement souhaité après la génération d'une force de frein hydraulique,
dans lequel la génération (ST250 ; ST450) de la force de frein hydraulique comprend le réglage au maximum d'une quantité de distribution d'huile du moteur d'entraînement lorsque le sens d'entraînement de la pelle sur roues ne concorde pas avec le sens d'entraînement souhaité.

2. Procédé selon la revendication 1, dans lequel la détection du sens d'entraînement de la pelle sur roues comprend la détection (110) d'un sens de fonctionnement de la boîte de vitesses de la pelle sur roues.

3. Procédé selon la revendication 1, dans lequel la détection du sens d'entraînement de la pelle sur roues comprend la détection (310) du sens de rotation d'une roue de la pelle sur roues.

4. Appareil permettant d'empêcher le recul d'une pelle sur roues, la pelle sur roues comprenant un moteur d'entraînement et une boîte de vitesses, l'appareil comprenant :
un capteur (110 ; 310) configuré pour détecter (ST210, ST220 ; ST410, ST420) un sens d'entraînement de la pelle sur roues sur une pente ; et
une unité de commande (120, 320) configurée pour comparer (ST230, ST260 ; ST430, ST460) le sens d'entraînement de la pelle sur roues avec un sens d'entraînement souhaité par un conducteur pour la pelle sur roues, et pour engendrer de manière sélective (ST250, ST260 ; ST450, ST460) une force de frein hydraulique à l'aide du moteur d'entraînement de la pelle sur roues en fonction des résultats de comparaison ; **caractérisé en ce que** :
l'unité de commande (120) fait passer la pelle sur roues à un entraînement normal (ST240 ; ST440) lorsque le sens d'entraînement de la pelle sur roues concorde (ST260 ; ST460) avec le sens d'entraînement souhaité après génération de la force de frein hydraulique, et
dans lequel l'unité de commande (120) est configurée pour régler au maximum une quantité de distribution d'huile du moteur d'entraînement afin d'engendrer (ST250 ; ST450) la force de frein hydraulique lorsque le sens d'entraînement de la pelle sur roues ne concorde pas avec le sens d'entraînement souhaité.

5. Appareil selon la revendication 4, dans lequel le capteur comprend un capteur de boîte de vitesses (110) configuré pour détecter un sens de fonctionnement de la boîte de vitesses de la pelle sur roues.

6. Appareil selon la revendication 4, dans lequel le capteur comprend un capteur de roue (310) configuré pour détecter le sens de rotation d'une roue de la pelle sur roues.
